# EUROPÄISCHE PATENTSCHRIFT

(11) **EP 2 708 393 B1**
(45) Veröffentlichungstag und Bekanntmachung des Hinweises auf die Patenterteilung: **14.10.2015**
(21) Anmeldenummer: 13003516.5
(22) Anmeldetag: 11.07.2013
(51) Int. Cl.: B60J 5/06

(54) **Fahrzeugaufbau für den Transport von schütt- oder stapelbaren Transportgütern**
Vehicle structure for the transport of bulk or stackable transport goods
Caisse de véhicule pour le transport de marchandises de transport empilables ou coulables

(30) Priorität: 14.09.2012 DE 102012018156
(43) Veröffentlichungstag der Anmeldung: 19.03.2014
(73) Patentinhaber: Fahrzeugwerk Bernard Krone GmbH, 48480 Spelle (DE)
(72) Erfinder: Menke, Ansgar, D-49757 Werlte (DE); Perk, Thorsten, 26901 Lorup (DE)
(74) Vertreter: Pott, Ulrich

(56) Entgegenhaltungen:
- WO-A1-2011/158035
- GB-A- 2 327 450
- GB-A- 2 457 128
- GB-A- 2 471 541
- US-A- 4 762 361

## Beschreibung

Die Erfindung bezieht sich auf einen Fahrzeugaufbau für den Transport von schütt- oder stapelbaren Transportgütern, beispielsweise von Fahrzeugreifen, mit einem sich oberhalb eines Laderaumbodens erstreckenden Laderaum, der von Stirnwänden vorder- und rückseitig begrenzt ist und zwischen denen sich in Längsrichtung des Fahrzeugaufbaus Seitenplanen zum Verschließen des Laderaums erstrecken, wobei sich im geschlossenen Zustand die Seitenplanen entlang von aufrecht am Laderaumboden festgelegten Rungen erstrecken, die eine der vorderen Stirnwand zugeordnete Eckrunge und eine der hinteren Stirnwand zugeordnete Eckrungen umfassen, wobei zwischen der der vorderen Stirnwand zugeordneten Eckrunge und der der hinteren Stirnwand zugeordneten Eckrunge zumindest ein mit Höhenabstand zum Laderaumboden und sich im wesentlichen parallel zu diesem erstreckendes Spannelement vorgesehen ist, das über zumindest einen einer der beiden Eckrungen zugeordneten Spannkrafterzeuger spannbar ist

Fahrzeugaufbauten der vorgenannten Art für den Transport von Reifen im öffentlichen Straßenverkehr sind allgemein bekannt. Dazu ist es beispielsweise bekannt; Fahrzeugreifen in Stapeln gleicher Höhe oder in Stapeln in abgestufter Höhe auf dem Laderaumboden zu platzieren, die von den Seitenplanen seitlich begrenzt werden.

Darüber hinaus ist es bekannt, die Fahrzeugreifen auf dem Laderaumboden in einem Brezelverbund abzulegen und den Laderaum nach innen hin durch horizontal und parallel zur Fahrzeuglängsachse ausgerichtete, mit Abstand zueinander angeordnete Latten seitlich zu begrenzen, die sich zum Laderaum hin vor den jeweiligen Seitenplanen erstrecken und je an Rungen gehaltert sind. Darüber hinaus ist es bekannt, solche Latten und/oder Mittelrungen in Querrichtung durch Gurtbänder in Diagonalanordnung und/oder horizontal quer zur Längserstreckung des Laderaumes zu verzurren. Nachteilig hierbei ist, dass eine Ausbeulung von Seitenplanen nicht zu verhindern ist. Darüber hinaus kann das Transportgut durch die Gurte beschädigt werden. Zudem ist der Beladungs- und Entladungsvorgang beeinträchtigt. Bei einem Ausbeulen der Seitenplanen ist jedoch nicht mehr gewährleistet, dass die maximal zulässige Fahrzeugbreite eingehalten ist, was unkalkulierbar zu schwerwiegenden Sicherheitsrisiken führen kann.

Es ist versucht worden, bei gebrezelter Beladung des Laderaumes durch die Fahrzeugreifen Zusatzausstattungen vorzusehen, beispielsweise in Gestalt von mit Lochausnehmungen versehenen zusätzlichen Aufsatzlatten, die zwischen den Rungen anzuordnen sind und ein Ausbeulen verhindern sollen. Diese zusätzlichen Aufsatzlatten können zwar einen Beitrag dazu leisten, einem Ausbeulen vorzubeugen. Nachteilig hierbei ist jedoch, dass diese einen erheblichen Bauaufwand darstellen. Sollen nach einem Reifentransport andere Materialien befördert werden, die die Aufsatzlatten nicht benötigen, sind diese mit erheblichem Aufwand zu entfernen und mit einem nicht unerheblichen Platzbedarf zu bevorraten, der in aller Regel im Fahrzeug nicht zur Verfügung gestellt werden kann. Dies steht einer Nutzung des Fahrzeuges für variable Transportaufgaben entgegen.

Aus der GB 2457128 A und der GB 2327450 A sind jeweils Fahrzeugaufbauten der eingangs genannten Art bekannt.

Bei dem Fahrzeugaufbau nach der GB 2457128 A sind zwischen einer Innenwandung und einer Außenwandung einer Seitenplane Spannstangen angeordnet, die einerseits an einem Außenbaum des Fahrzeugaufbaus angreifen und andererseits an dem Fahrzeugchassis, wobei sich über eine Hebeleinrichtung und die Spannstange der Außenbaum mit dem Fahrzeugchassis verspannen lässt. In horizontaler Richtung durchgreifen die jeweiligen Seitenplanen mit Abstand zum Fahrzeugboden hin angeordnete Gurte, die mit rückwärtigen Eckrungen über Schnallen oder Ratscheneinheiten mit der Eckrunge zu verzurren sind. Die Schnallen oder Ratscheneinheiten sind dabei lagefixiert an den hinteren Eckrungen festzulegen und haben einen vorgegebenen Spannweg, so dass eine Spannkraft nicht individuell einstellbar ist. Zudem werden die Eckrungen senkrecht zu ihrer Hocherstreckung mit der Spannkraft belastet, was die Gefahr in sich birgt, dass diese mechanisch verformt werden.

Gleiches gilt auch für den Fahrzeugaufbau nach der GB 2327450, bei der ein horizontal ausgerichteter, in den Seitenplanen verlaufender Gurt ebenfalls über eine Schnalle zu verspannen ist. Diese ist auch mit horizontal wirkender Spannkraft an Rungen des Fahrzeugaufbaus festgelegt, so dass auch dort die Spannkraft dazu führen kann, dass sich die Rungen aufgrund der senkrecht zu ihrer Hocherstreckung wirkenden Spannkräfte mechanisch verformen.

Bei dem Fahrzeugaufbau nach der US 4,762,361 A sind in horizontaler Ausrichtung zur Seitenplane Verstärkungselemente vorgesehen, die dazu dienen, eine ZickZack-Auffaltung der Seitenplane zu unterstützen. Eine Verspannung der Seitenplane durch einen Spannkrafterzeuger ist jedoch bei diesem Fahrzeugaufbau nicht möglich.

Es ist Aufgabe der vorliegenden Erfindung, einen Fahrzeugaufbau der eingangs genannten Art zu schaffen, der universell einsetzbar und kostengünstig herstellbar ist und bei dem einem Ausbeulen einer Seitenplane wirksam entgegen gewirkt ist.

Zur Lösung dieser Aufgabe zeichnet sich der Fahrzeugaufbau der eingangs genannten Art dadurch aus, dass der Spannkrafterzeuger mit einem Schubstück zusammenwirkt, das höhenveränderlich einer Eckrunge zugeordnet ist und über das das Spannelement spannbar ist.

Damit ist ein Fahrzeugaufbau geschaffen, bei dem mit dem einer Seiteplane zugeordneten Spannelement und dem Schubstück eine Seitenplane wirksam auszusteifen ist. Das Schubstück kann zur Spannung des Spannseiles in vertikaler Ausrichtung an einer Eckrunge zu verschieben sein. Damit ist über das vertikal und damit höhenveränderlich bewegbare Schubstück eine horizontal wirkende Spannkraft so für die entsprechende Abstützung in der Eckrunge von der kraftmäßigen Winkung auf die Eckrunge zu übertragen, dass die Spannkraft in vertikaler Richtung wirkt, so dass einem Ausbauchen und mithin einer mechanischen Verformung der Eckrunge wirksam entgegen gewirkt ist.

Besonders vorteilhaft ist, wenn das Spannelement, insbesondere das Spannseil über eine Umlenkrolle wirkt und damit über die Umlenkrolle aus seiner horizontalen Ausrichtung der Spannkraft in etwa vertikal umgelenkt wird. Dazu kann beispielsweise das Schubstück in einer Schubeinheit translatorisch bewegt sein, welche mit der Eckrunge verbunden ist.

Diese ist dann mit dem Hubausleger des Spannkrafterzeugers, also ins-besondere der Handpumpe, zu verbinden. Dabei kann der Spannkrafterzeuger auch so gestaltet sein, dass es zwei oder mehr mit Abstand zueinander an einer Seitenplane angeordneten Spannelementen zugeordnet ist, wozu es entsprechende Hubausleger hat. Die Spannelemente können in einer Grundeinstellung an dem Schub-stück beispielsweise arretiert werden, um bei Vorsehen von zwei mit Abstand zuein-ander angeordneten Spannelementen unterschiedlichen Längenverhältnissen eines Spannelementes durch verschiedene Grundeinstellungen mit entsprechender Arretierung der Spannseile Rechnung zu tragen. Arretierelemente können auch vorgesehen sein, um die jeweiligen Spannelemente, also in aller Regel die jeweiligen Spannseile, in ihrer gespannten Lage mechanisch zu arretieren und damit die Spannkrafterzeuger zu entlasten.

Weitere vorteilhafte Augestaltungen der Erfindung ergeben sich aus weiteren Unteransprüchen, der nachfolgenden Beschreibung und den Figuren. In den Figuren zeigen:
- Fig. 1: in einer schematischen Prinzipdarstellung ein Ausführungsbeispiel eines Fahrzeugaufbaus gemäß der Erfindung mit einer Ansicht in den Laderaum mit einer vorderen, in Fahrtrichtung linken nicht gezeigten Seitenplane mit einer rückwärtig geschlossenen (rechten) Seitenplane ohne Darstellung der Außenbäume sowie zwei Spannseilen, die sich zwischen einer rückwärtigen Stirnwand und einer vorderen Stirnwand erstrecken, jeweils in einer perspektivischen Seitenansicht des Fahrzeugaufbaus;
- Fig. 2: zeigt das Ausführungsbeispiel nach Fig. 1 mit einer in Fahrtrichtung linken Seitenplane (ohne Innenplane) in einer analogen Darstellung mit Planentaschen und daran angebrachten Aluminiumprofilen und den linken Außenbaum;
- Fig. 3: ausschnittsweise das Detail "A" in Fig. 1 ohne das Eckrungenabdeckblech;
- Fig. 4: ausschnittsweise vergrößert ein Spannseil mit Schubstück in einer analogen Darstellung wie das Ausführungsbeispiel nach Fig. 3;
- Fig. 5: Befestiger für einander festzulegenden Spannelementteilabschnitten;

In der Zeichnung sind grundsätzlich gleichwirkende Teile mit übereinstimmenden Bezugsziffern versehen.

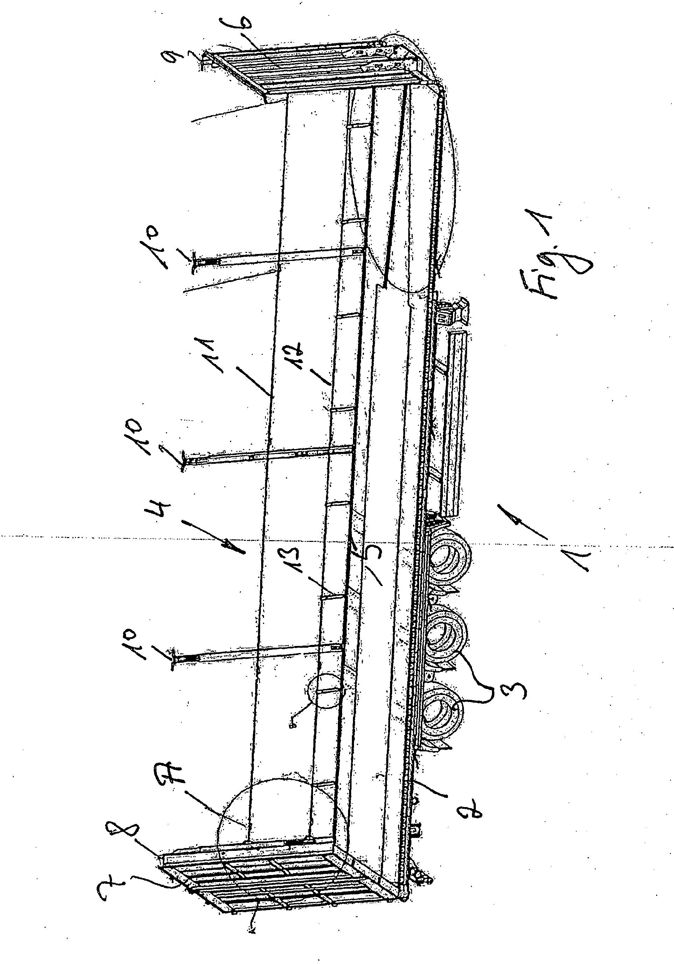

Allgemein mit 1 ist ein Fahrzeugaufbau beziffert, der über ein Fahrzeugchassis 2 und Räder 3 auf dem Erdboden abgestützt ist. Dieser Fahrzeugaufbau hat einen Laderaum 4 mit einem Laderaumboden 5 sowie eine vordere Stirnwandung 6 und eine rückwärtige Stirnwand 7, die in dem gezeigten Ausführungsbeispiel durch aufschwenkbare Hecktüren gebildet ist. Zwischen den aufschwenkbaren Hecktüren und der vorderen Stirnwand 6 erstreckt sich der Seitenbereich des Aufbaus 1, der durch nicht näher in Fig. 1 gezeigte Schiebeplanen zu verschließen ist. Oberhalb der vorderen Stirnwand 6, der Hecktüren 7 und den beiden seitlichen Schiebeplanen erstreckt sich ein nicht gezeigtes Dach, das auf Eckrungen 8 und 9 sowie Seitenrungen 10 abzustützen ist. Das Dach wird seitlich durch zwei nicht gezeigte Außenbäume begrenzt.

Wie im Einzelnen näher ersichtlich ist, erstrecken sich zwischen den beiden Eckrungen 8 und 9 mit Höhenabstand zueinander versetzt Spannelemente 11 und 12 in Gestalt von Spannseilen, die von einem oder mehreren im Einzelnen noch näher darzustellenden Spannkrafterzeugern zwecks Spannung und Aussteifung der jeweiligen Seitenplane zu spannen sind.

Das untere Spannseil 12 ist über einen Spannelementhalter 13 an dem Laderaumboden 5 zusätzlich abgestützt.

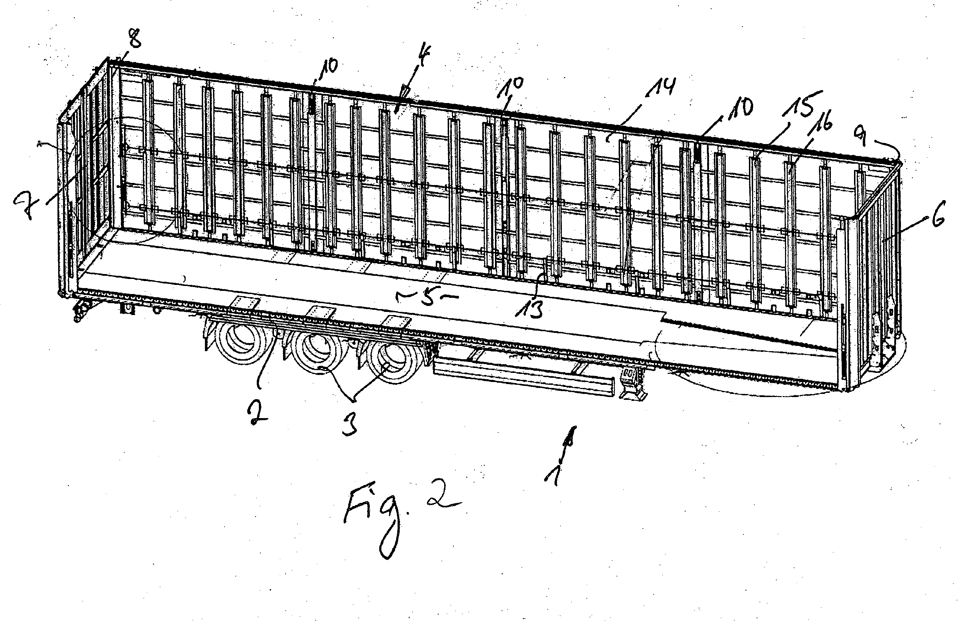

In Fig. 2 ist eine zu Fig. 1 analoge Darstellung des Fahrzeugaufbaus 1 gezeigt. Dort ist auch die Außenseitenplane 14 ersichtlich. Zwischen den jeweiligen Seitenrungen 10 sind in der Seitenplane 14 Planentaschen 15 ausgebildet, in die Profilkörper 16 in im Wesentlichen leistenförmiger Gestalt eingesetzt sind und die mit den Spannseilen 11 und 12 zu verbinden sind. Diese Profilkörper 16 dienen zur weiteren Aussteifung der Seitenplane 14 und können von einer inneren nicht gezeigten Innenplane insgesamt belegt sein, so dass nach innen hin der Fahrzeugaufbau geschlossen ist und sich eine im Wesentlichen ebene Fläche der Plane ergibt.

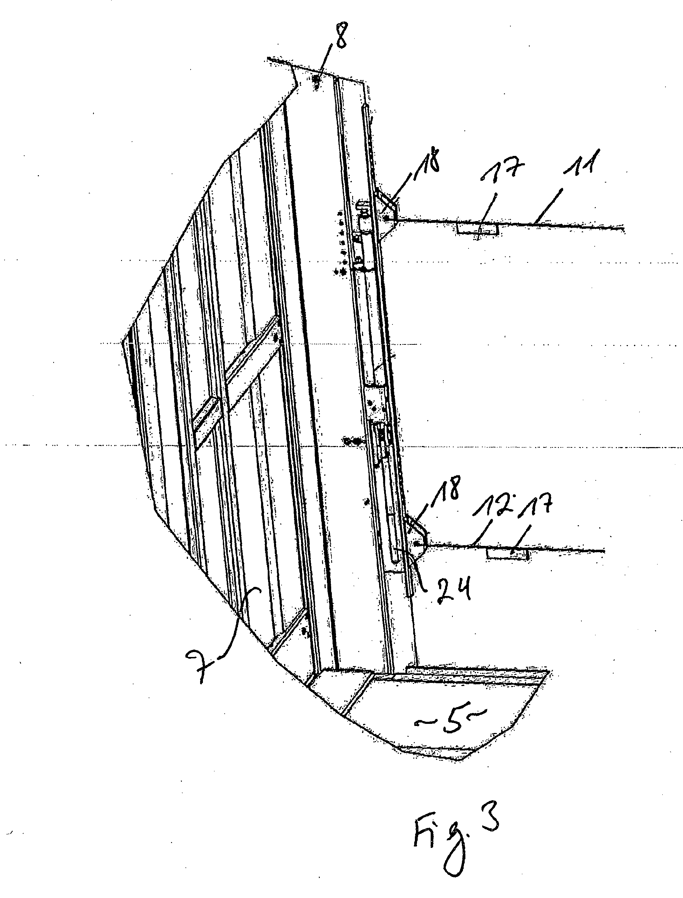

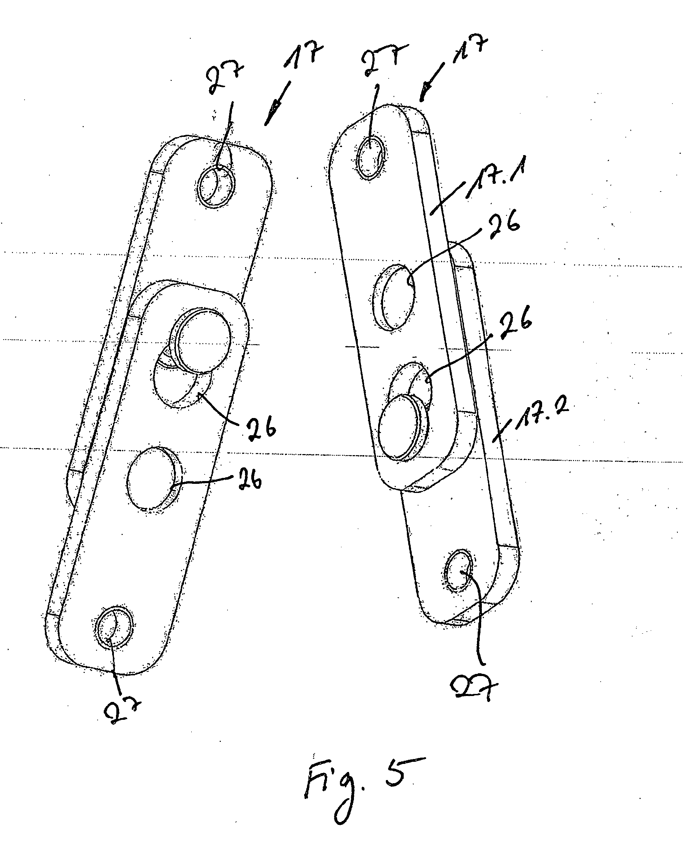

In Fig. 3 ist die Anbindung der Spannseile 11 und 12 als Spannelemente für die Seitenplane angedeutet. Diese besteht zunächst aus Spannelementteilabschnitten, die über Verbinder 17 miteinander zu verbinden sind. Die Verbinder 17 sind näher in Fig. 5 veranschaulicht.

Nach Entspannen des Spannelementes und Lösen der Plane kann diese Seitenplane 14 jeweils bis zur ersten Verbindung zwischen Seil und Profilkörper geöffnet werden. Erst nach Öffnen des ersten sichtbaren Verbinders lässt sich die Plane weiter öffnen, da sich das Spannelement im Innenraum des Fahrzeugs an den Innenseiten der Mittel-Seitenrunge abstützt. Ohne das Trennen des Spannelements würde sich die Plane nur bis zur jeweiligen folgenden Mittelseitenrunge öffnen lassen.

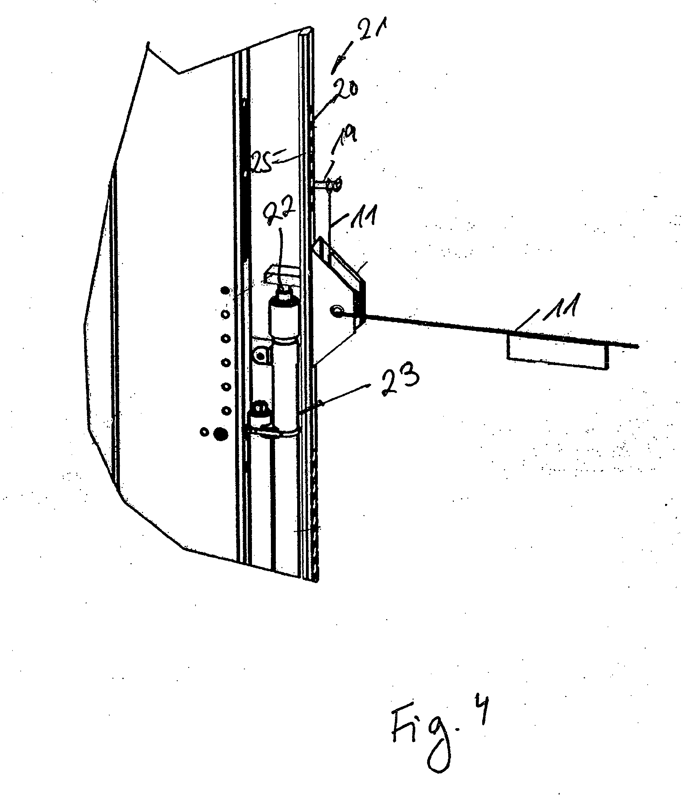

Das jeweilige Spannseil 11 bzw. 12 greift im Bereich der hinteren Eckrunge 8 an ein jeweiliges Befestigungsstück 18 an, in dem eine Umlenkrolle, die im Einzelnen nicht ersichtlich ist, derart geführt ist, dass das jeweilige Spannseil 11 bzw. 12 aus seiner horizontalen Erstreckung um ca. 90° umgelenkt wird und von dort aus über eine Schraube 19 (Fig. 4) mit einem Schubstück 20 zu verbinden ist. Dieses Schubstück 20 ist Teil einer allgemein mit 21 bezifferten Schubeinheit, die an der Eckrunge 8 festgelegt ist. Das Schubstück kann innerhalb der Schubheinheit 21 translatorisch auf- und abbewegt werden, und zwar von dem Hubausleger 22 eines Kolbens einer Handpumpe 23, die über einen manuell zu betätigenden Handhebel 24 (Fig. 3) zu betätigen ist.

Bei einer Ausfahrbewegung des Hubkolbens 22 wird das Schubstück 20 und mit ihm die Schraube 19 und das Zugseil 11 nach oben bewegt, wodurch das Seil 11 gespannt wird. Auch das untere Seil 12 ist mit der Handpumpe 23 als Spannkrafterzeuger verbunden, so dass auch das Spannseil 12 in analoger Weise parallel zu spannen ist. Durch entsprechende Arretieröffnungen 25 lässt sich die Schraube 19 an verschiedenen Stellen in der Grundeinstellung, d.h. in der Nullposition fixieren, um verschiedene Längen der Seile 11 bzw. 12 berücksichtigen zu können

In Fig. 5 ist schließlich das Verbindungselement 17 für das jeweilige Spannseil 11, 12 gezeigt, die eine entsprechende Öffnung 26 aufweist, das von einer mit einem Kopf versehenen Schraube zu durchdringen ist. Werden diese auf Zug beansprucht, sind entsprechende Seile, die bei 27 angreifen können, als Teilseilabschnitte miteinander zu verbinden und bei einem Öffnen der Plane auch wieder voneinander zu trennen.

## Patentansprüche

1. Fahrzeugaufbau (1) für den Transport von schütt- oder stapelbaren Transportgütern, beispielsweise von Fahrzeugreifen, mit einem sich oberhalb eines Laderaumbodens (5) erstreckenden Laderaum (4), der von Stirnwänden (6, 7) vorder- und rückseitig begrenzt ist und zwischen denen sich in Längsrichtung des Fahrzeugaufbaus Seitenplanen zum Verschließen des Laderaums (4) erstrecken, wobei sich im geschlossenen Zustand die Seitenplanen entlang von aufrecht am Laderaumboden festgelegten Rungen (8, 9, 10) erstrecken, die eine der vorderen Stirnwand (6) zugeordnete Eckrunge (9) und eine der hinteren Stirnwand (7) zugeordnete Eckrunge (8) umfassen, wobei zwischen der der vorderen Stirnwand (6) zugeordneten Eckrunge (9) und der der hinteren Stirnwand (7) zugeordneten Eckrunge (8) zumindest ein mit Höhenabstand zum Laderaumboden (5) und sich im wesentlichen parallel zu diesem erstreckendes Spannelement (11, 12) vorgesehen ist, das über zumindest einen einer der beiden Eckrungen (8, 9) zugeordneten Spannkrafterzeuger (23) spannbar ist, **dadurch gekennzeichnet, dass** der Spannkrafterzeuger (23) mit einem Schubstück (20) zusammenwirkt, das höhenveränderlich einer Eckrunge (8) zugeordnet ist und über das das Spannelement (11, 12) spannbar ist.

2. Fahrzeugaufbau nach Anspruch 1, **dadurch gekennzeichnet, dass** jeder Seitenplane zumindest zwei mit Höhenabstand und im wesentlichen parallel zum Fahrzeugboden (5) ausgerichtete Spannelemente (11, 12) zugeordnet sind.

3. Fahrzeugaufbau nach Anspruch 1 oder 2, **dadurch gekennzeichnet, dass** das Spannelement (11, 12) als Spannseil ausgebildet ist.

4. Fahrzeugaufbau nach einem der Ansprüche 1 bis 3, **dadurch gekennzeichnet, dass** jedes Spannelement (11, 12) aus Teilspannelementen besteht, die über einen Spannelementverbinder (17) miteinander verbindbar und voneinander lösbar sind.

5. Fahrzeugaufbau nach einem der Ansprüche 1 bis 4, **dadurch gekennzeichnet, dass** der Spannkrafterzeuger (23) als pneumatisch oder hydraulisch arbeitende Pumpe mit zumindest einem Hubausleger (22) ausgebildet ist.

6. Fahrzeugaufbau nach einem der Ansprüche 1 bis 5, **dadurch gekennzeichnet, dass** ein Spannkrafterzeuger (23) zwei oder mehr einander zugeordneten Spannelementen (11, 12) zugeordnet ist.

7. Fahrzeugaufbau nach einem der Ansprüche 1 bis 6, **dadurch gekennzeichnet, dass** eine Schubeinheit (21) mit einer Umlenkrolle versehen ist zur Umlenkung des als Spannseil ausgebildeten Spannelementes (11, 12), wobei über die Umlenkrolle das Spannseil (11, 12) umgelenkt und in verschiedene Spannlagen durch das Schubstück (20) überführbar ist.

8. Fahrzeugaufbau nach Anspruch 7, **dadurch gekennzeichnet, dass** das Schubstück (20) in verschiedenen Lagepositionen arretierbar ist.

9. Fahrzeugaufbau nach Anspruch 6 oder 7, **dadurch gekennzeichnet, dass** das Schubstück (20) Bestandteil einer Schubeinheit (21) ist, die mit dem Spannkrafterzeuger (23) verbindbar ist und dass das Schubstück (20) lageveränderlich innerhalb der Schubeinheit arretierbar ist.

10. Fahrzeugaufbau nach einem der Ansprüche 7 bis 9, **dadurch gekennzeichnet, dass** einem oberen und einem unteren Spannelement (11, 12) jeweils eine eigene Umlenkrolle zugeordnet sind, die unabhängig voneinander arretierbar in der Schubeinheit (21) sind.

11. Fahrzeugaufbau nach Anspruch 2 oder einem der Ansprüche 3 bis 10 sofern von Anspruch 2 abhängig **dadurch gekennzeichnet, dass** die Seitenplane Planentaschen (15) aufweist, in denen Profilkörper (16) zur Aussteifung der jeweiligen Seitenplanen vorgesehen sind, wobei die Spannelemente (11, 12) die Profilkörper (16) abstützen.

12. Fahrzeugaufbau nach Anspruch 11, **dadurch gekennzeichnet, dass** das Spannelement (11, 12) einen Raum zwischen einem Profilkörper (16) und einem diesem zugeordneten Abdeckkörper durchsetzt.

13. Fahrzeugaufbau nach Anspruch 12, **dadurch gekennzeichnet, dass** der Raum zwischen dem Profilkörper (16) und dem Abdeckkörper für das Spannelement (11, 12) durch ein Abdeckblech zum Laderaum (4) hin ausgerichtet verschließbar ist.

14. Fahrzeugaufbau nach einem der Ansprüche 1 bis 13, **dadurch gekennzeichnet, dass** das Spannelement (12) mit Höhenabstand zum Laderaumboden (4) an einem Spannelementhalter (13) abgestützt ist.

15. Fahrzeugaufbau nach Anspruch 14, **dadurch gekennzeichnet, dass** der Spannelementhalter (13) am Laderaumboden (5) abgestützt ist.

16. Fahrzeugaufbau nach Anspruch 15, **dadurch gekennzeichnet, dass** die Rungen (10) und der Spannelementhalter (13) an einer an der Seitenaußenkante des Laderaumbodens (5) vorgesehenen Befestigungsleiste abstütztbar sind.

17. Fahrzeugaufbau nach Anspruch 2 oder einem der Ansprüche 3 bis 16 sofern von Anspruch 2 abhängig, **dadurch gekennzeichnet, dass** sich die Spannelemente (11,12) an Seitenrungen abstützen.

18. Fahrzeugaufbau nach Ansprüchen 14 and 17, **dadurch gekennzeichnet, dass** der Spannelementhalter (13) mit einer Neigung zur Mitte des Laderaumbodens (5) an diesem befestigt ist.

19. Fahrzeugaufbau nach Ansprüchen 11 und 18, **dadurch gekennzeichnet, dass** die Profilkörper (16) mit der Planentasche (15) durch eine Nietverbindung verbunden sind.

20. Fahrzeugaufbau nach einem der Ansprüche 1 bis 19, **dadurch gekennzeichnet dass** das Spannelement (11, 12) an Befestigungselementen (19) von zwei benachbarten Rungen (9) festgelegt ist.

21. Fahrzeugaufbau nach einem der vorangehenden Ansprüche, **dadurch gekennzeichnet, dass** eine dem Laderaum (4) zugewandte innere Plane vorgesehen ist, die die Seitenplane und das Spannelement (11, 12) übergreift und diese zum Laderaum (4) hin abdeckt.

## Claims

1. Vehicle body (1) for transporting bulk or stackable goods to be transported, for example vehicle tyres, comprising a loading space (4) which extends above a loading space floor (5) and is delimited at the front and back by end walls (6, 7), between which side curtains for closing the loading space (4) extend in the longitudinal direction, the side curtains extending, when closed, along stakes (8, 9, 10) which are fixed to the loading space floor in an upright position and comprise a corner stake (9) assigned to the front end wall (6) and a corner stake (8) assigned to the rear end wall (7), at least one tensioning element (11, 12) being provided between the corner stake (9) assigned to the front end wall (6) and the corner stake (8) assigned to the rear end wall (7), which tensioning element can be tensioned by means of at least one tensioning force generator (23) assigned to one of the two corner stakes (8, 9), is at a vertical distance from the loading space floor (5) and extends substantially in parallel therewith, **characterised in that** the tensioning force generator (23) interacts with a slide part (20) which is assigned to a corner stake (8) in a height-adjustable manner and by means of which the tensioning element (11, 12) can be tensioned.

2. Vehicle body according to claim 1, **characterised in that** each side curtain is assigned at least two tensioning elements (11, 12) which are at a vertical distance from the vehicle floor (5) and are oriented substantially in parallel therewith.

3. Vehicle body according to either claim 1 or claim 2, **characterised in that** the tensioning element (11, 12) is formed as a tensioning cable.

4. Vehicle body according to any of claims 1 to 3, **characterised in that** each tensioning element (11, 12) consists of partial tensioning elements which can either be connected to or detached from one another by means of a tensioning element connector (17).

5. Vehicle body according to any of claims 1 to 4, **characterised in that** the tensioning force generator (23) is formed as a pneumatic or hydraulic pump having at least one lifting arm (22).

6. Vehicle body according to any of claims 1 to 5, **characterised in that** one tensioning force generator (23) is assigned to two or more tensioning elements (11, 12) which are assigned to one another.

7. Vehicle body according to any of claims 1 to 6, **characterised in that** a slide unit (21) is provided with a deflection roller for deflecting the tensioning element (11, 12) formed as a tensioning cable, the tensioning cable (11, 12) being deflected by the deflection roller and being movable into different tensioning positions by the slide part (20).

8. Vehicle body according to claim 7, **characterised in that** the slide part (20) can be locked in various positions.

9. Vehicle body according to either claim 6 or claim 7, **characterised in that** the slide part (20) is a component of a slide unit (21) which can be connected to the tensioning force generator (23), and **in that** the slide part (20) can be locked inside the slide unit in a position-variable manner.

10. Vehicle body according to any of claims 7 to 9, **characterised in that** an upper and a lower tensioning element (11, 12) are each assigned their own deflection roller which can be locked independently of one another in the slide unit (21).

11. Vehicle body according to claim 2 or any of claims 3 to 10 when dependent on claim 2, **characterised in that** the side curtain comprises curtain pockets (15), in which profile bodies (16) are provided for reinforcing the respective side curtains, the tensioning elements (11, 12) supporting the profile bodies (16).

12. Vehicle body according to claim 11, **characterised in that** the tensioning element (11, 12) penetrates a space between a profile body (16) and a cover body assigned thereto.

13. Vehicle body according to claim 12, **characterised in that** the space for the tensioning element (11, 12) between the profile body (16) and the cover body can be closed towards the loading space (4) by means of a cover panel.

14. Vehicle body according to any of claims 1 to 13, **characterised in that** the tensioning element (12) is supported on a tensioning element holder (13) at a vertical distance from the loading space floor (4).

15. Vehicle body according to claim 14, **characterised in that** the tensioning element holder (13) is supported on the loading space floor (5).

16. Vehicle body according to claim 15, **characterised in that** the stakes (10) and the tensioning element holder (13) can be supported on an attachment bar provided on the lateral outer edge of the loading space floor (5).

17. Vehicle body according to claim 2 or any of claims 3 to 16 when dependent on claim 2, **characterised in that** the tensioning elements (11, 12) are supported on side stakes.

18. Vehicle body according to claims 14 and 17, **characterised in that** the tensioning element holder (13) is attached to the loading space floor (5) such that it is inclined towards the centre thereof.

19. Vehicle body according to claims 11 and 18, **characterised in that** the profile bodies (16) are connected to the curtain pocket (15) by means of a rivet connection.

20. Vehicle body according to any of claims 1 to 19, **characterised in that** the tensioning element (11, 12) is fixed to attachment elements (19) of two adjacent stakes (9).

21. Vehicle body according to any of the preceding claims, **characterised in that** an inner curtain is provided which faces the loading space (4), overlaps the side curtain and the tensioning element (11, 12), and covers them towards the loading space (4).

## Revendications

1. Caisse de véhicule (1) pour le transport de marchandises de transport empilables ou coulables, par exemple des pneus pour véhicules, comprenant un espace de chargement (4) s'étendant au-dessus d'un plancher (5) de l'espace de chargement et délimité par des parois frontales (6, 7) à l'avant et à l'arrière et, entre celles-ci, s'étendent dans la direction longitudinale de la caisse de véhicule des bâches latérales pour fermer l'espace de chargement (4), les bâches latérales s'étendant à l'état fermé le long de poteaux (8, 9, 10) fixés verticalement sur le plancher de l'espace de chargement et qui comprennent un poteau d'angle (9) associé à la paroi frontale avant (6) et un poteau d'angle (8) associé à la paroi frontale arrière (7) et, entre le poteau d'angle (9) associé à la paroi frontale avant (6) et le poteau d'angle (8) associé à la paroi frontale arrière (7), au moins un élément de serrage (11, 12) qui s'étend à une certaine distance en hauteur par rapport au plancher (5) de l'espace de chargement et sensiblement parallèlement à celui-ci est prévu et peut être tendu par l'intermédiaire d'au moins un générateur de force de serrage (23) associé à l'un des deux poteaux d'angle (8, 9),
**caractérisée en ce que** le générateur de force de serrage (23) coopère avec une pièce de poussée (20) qui est associée à un poteau d'angle (8) pour modifier la hauteur et qui permet de tendre l'élément de serrage (11, 12).

2. Caisse de véhicule selon la revendication 1, **caractérisée en ce qu'**à chaque bâche latérale sont associés au moins deux éléments de serrage (11, 12) orientés à une certaine distance en hauteur et sensiblement parallèlement au plancher (5) du véhicule.

3. Caisse de véhicule selon la revendication 1 ou 2, **caractérisée en ce que** l'élément de serrage (11, 12) est réalisé sous forme de tendeur.

4. Caisse de véhicule selon une des revendications 1 à 3, **caractérisée en ce que** chaque élément de serrage (11, 12) est composé d'éléments de serrage partiels qui peuvent être reliés l'un à l'autre et détachés l'un de l'autre par l'intermédiaire d'un connecteur (1 7) d'éléments de serrage.

5. Caisse de véhicule selon une des revendications 1 à 4, **caractérisée en ce que** le générateur de force de serrage (23) est réalisé sous la forme d'une pompe pneumatique ou hydraulique avec au moins une flèche de levage (22).

6. Caisse de véhicule selon une des revendications 1 à 5, **caractérisée en ce qu'**un générateur de force de serrage (23) est associé à deux éléments de serrage (1 1 , 12) ou plus associés l'un à l'autre.

7. Caisse de véhicule selon une des revendications 1 à 6, **caractérisée en ce qu'**une unité de poussée (21) est équipée d'une poulie de déviation pour dévier l'élément de serrage (11, 12) réalisé sous forme de tendeur, le tendeur (11, 12) étant dévié par l'intermédiaire de la poulie de déviation et pouvant être transféré dans différentes positions de serrage par la pièce de poussée (20).

8. Caisse de véhicule selon la revendication 7, **caractérisée en ce que** la pièce de poussée (20) peut être arrêtée dans différentes positions.

9. Caisse de véhicule selon la revendication 6 ou 7, **caractérisée en ce que** la pièce de poussée (20) fait partie d'une unité de poussée (21) qui peut être reliée au générateur de force de serrage (23) et **en ce que** la pièce de poussée (20) peut être arrêtée à l'intérieur de l'unité de poussée pour modifier la position.

10. Caisse de véhicule selon une des revendications 7 à 9, **caractérisée en ce qu'**un élément de serrage supérieur et un élément de serrage inférieur (11, 12) sont chacun associés à une poulie de déviation propre et peuvent être arrêtés indépendamment l'un de l'autre dans l'unité de poussée (21).

11. Caisse de véhicule selon la revendication 2 ou une des revendications 3 à 10 dans la mesure où elle est dépendante de la revendication 2, **caractérisée en ce que** la bâche latérale présente des poches de bâche (1 5) dans lesquelles des corps profilés (16) sont prévus pour renforcer les bâches latérales respectives, les éléments de serrage (11, 12) étayant les corps profilés (16).

12. Caisse de véhicule selon la revendication 1 1 , **caractérisée en ce que** l'élément de serrage (11, 12) pénètre dans un espace entre un corps profilé (16) et un corps de protection associé à celui-ci.

13. Caisse de véhicule selon la revendication 12, **caractérisée en ce que** l'espace entre le corps profilé (16) et le corps de protection pour l'élément de serrage (1 1, 12) peut être fermé par une tôle de protection orientée vers l'espace de chargement (4).

14. Caisse de véhicule selon une des revendications 1 à 13, **caractérisée en ce que** l'élément de serrage (12) est étayé sur un support d'élément de serrage (1 3) à une certaine distance en hauteur par rapport au plancher (4) de l'espace de chargement.

15. Caisse de véhicule selon la revendication 14, **caractérisée en ce que** le support d'élément de serrage (13) est étayé sur le plancher (5) de l'espace de chargement.

16. Caisse de véhicule selon la revendication 15, **caractérisée en ce que** les poteaux (10) et le support d'élément de serrage (13) peuvent être étayés sur un rail de fixation prévu sur le bord extérieur latéral du plancher (5) de l'espace de chargement.

17. Caisse de véhicule selon la revendication 2 ou une des revendications 3 à 16 dans la mesure où elle est dépendante de la revendication 2, **caractérisée en ce que** les éléments de serrage (11, 12) sont étayés sur des poteaux latéraux.

18. Caisse de véhicule selon les revendications 14 et 17, **caractérisée en ce que** le support d'élément de serrage (13) est fixé au plancher (5) de l'espace de chargement avec une inclinaison au milieu de celui-ci.

19. Caisse de véhicule selon les revendications 11 et 18, **caractérisée en ce que** les corps profilés (16) sont reliés à la proche (1 5) de la bâche par un assemblage par rivets.

20. Caisse de véhicule selon une des revendications 1 à 19, **caractérisée en ce que** l'élément de serrage (11, 12) est fixé à des éléments de fixation (19) par deux poteaux (9) adjacents.

21. Caisse de véhicule selon une des revendications précédentes, **caractérisée en ce qu'**un bâche intérieure est prévue en regard de l'espace de chargement (4), déborde sur la bâche latérale et l'élément de serrage (11, 12) et protège ceux-ci par rapport à l'espace de chargement (4).
